**Europäisches Patentamt**

**European Patent Office**

**Office européen des brevets**

(19)

(11) **EP 1 396 926 A1**

(12) **EUROPEAN PATENT APPLICATION**

(43) Date of publication:
**10.03.2004 Bulletin 2004/11**

(51) Int Cl.⁷: **H02M 3/335**

(21) Application number: **03020182.6**

(22) Date of filing: **05.09.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Catona, Giuseppe**<br>  **10147 Torino (IT)**<br>• **Varrone, Piergiorgio**<br>  **10025 Pino Torinese (IT)** |
| (30) Priority: **06.09.2002 IT TO20020782** | (74) Representative: **Cerbaro, Elena, Dr. et al**<br>**STUDIO TORTA S.r.l.,** |
| (71) Applicant: **C.R.F. Società Consortile per Azioni**<br>**10043 Orbassano (TO) (IT)** | **Via Viotti, 9**<br>**10121 Torino (IT)** |

(54) **DC-DC converter with active clamp circuit**

(57)  There is described a DC-DC converter (20) having a first and a second input terminal (22, 24) connected, in use, to an electric power source; a first and a second output terminal (26, 28), between which a load (30) is connected in use; a transformer (32); a bridge switching circuit (34) connected at the input to the first and second input terminal (22, 24), and at the output to the primary winding of the transformer (32); a rectifier circuit (36) connected at the input to the secondary winding of the transformer (32), and having a first and a second output terminal (68, 70) connected respectively to a first and a second intermediate node (A, B); a snubber circuit (39) connected between the first and second intermediate node (A, B); and a filter circuit (38) interposed between the snubber circuit (39) and the first and second output terminal (26, 28) of the converter; the snubber circuit (39) having a capacitor (96) and a switch (94) connected in series between the first and second intermediate node (A, B), and a diode (98) connected in parallel with the switch (94).

Fig.4

EP 1 396 926 A1

**Description**

The present invention relates to a DC-DC converter.

As is known, currently marketed switching DC-DC converters employ inductive components, charging and discharging of which are controlled by active components defined by control transistors switching between a saturation and cut-off (on/off) condition.

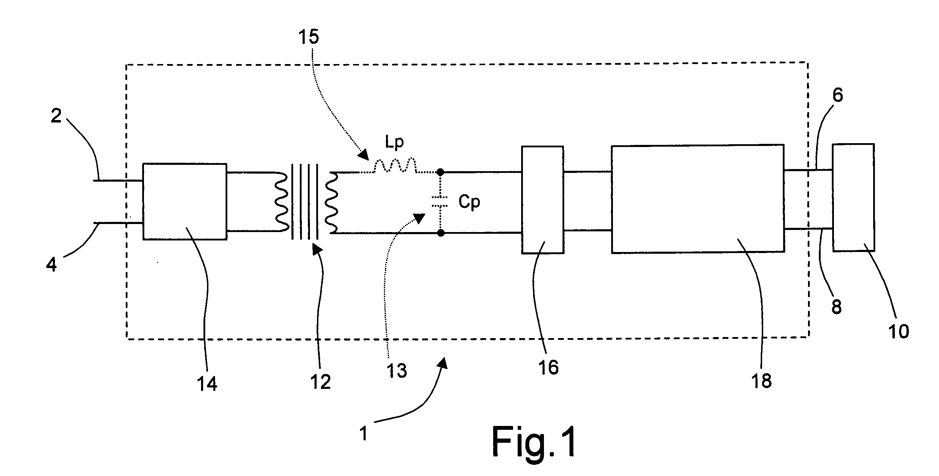

In Figure 1, a DC-DC converter, indicated hereinafter by 1, comprises a first and a second input terminal 2, 4 connected respectively, in use, to the positive and negative poles of an electric power source (not shown); and two output terminals 6, 8, between which a load 10 is connected in use.

More specifically, the DC-DC converter comprises a voltage transformer 12; a bridge switching circuit 14 interposed between the input terminals 2, 4 of converter 1 and the primary winding of transformer 12; and a rectifier circuit 16 connected at the input to the secondary winding of transformer 12, and at the output to output terminals 6, 8 via a filter circuit 18.

Bridge switching circuit 14 typically comprises a stabilizing capacitor (not shown) connected between first and second input terminals 2 and 4; and two pairs of switches (not shown) connected in series between first and second input terminals 2 and 4 and controlled in phase opposition by respective pulse width modulated (PWM) signals supplied by a signal source (not shown).

Bridge switching circuit 14 also comprises four diodes (not shown), each of which is connected to a respective switch (not shown), with the respective anode and cathode terminals antiparallel with the switch, i.e. in such a configuration as to prevent current conduction in the same direction as the switch.

Rectifier circuit 16 is connected downstream from the secondary winding of transformer 12 and upstream from filter circuit 18, and is typically defined by a full diode bridge (not shown) or a half diode bridge (not shown), and filter circuit 18 is typically defined by an LC network comprising an inductor and a capacitor appropriately connected to each other upstream from the first and second output terminal 6, 8 of converter 1.

Transformer 12 is known to have both capacitive parasitic elements, which may be represented by a capacitor 13 (shown schematically by the dotted line in Figure 1) having a capacitance $C_P$ and connected parallel with the secondary winding of transformer 12; and inductive parasitic elements, which may be represented by an inductor 15 (shown schematically by the dotted line in Figure 1) connected in series between an output terminal of the secondary winding and a terminal of capacitor 13, and having a parasitic inductance $L_P$ indicating the flow dispersed by transformer 12.

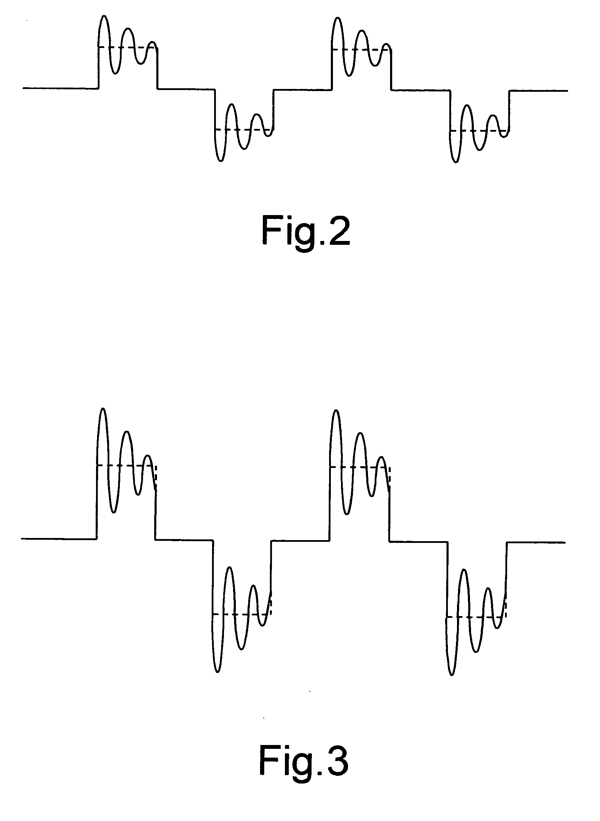

The above inductive and capacitive parasitic elements of transformer 12, together with the parasitic elements introduced by the connections, induce in the DC-DC converter spurious resonance at higher than the switching frequency, and generate, in the time domain, overvoltages (shown by the continuous lines in Figures 2 and 3) which overlap the theoretical waveforms of the voltages at the primary and secondary windings of transformer 12 (shown by the dash lines in Figures 2 and 3), thus resulting at times in severe electrical stress on the diodes of rectifier circuit 16. Voltage, in fact, may even be over twice the theoretical value.

In the case of DC-DC converters employing a half-bridge rectifier circuit, the voltage at the diode terminals is normally twice that of a full-bridge rectifier, so that further overvoltages may exceed the maximum limits of the circuit components, thus damaging the bridge diodes.

Despite progressive damping, such overvoltages at times also produce undesired dissipative switching of the switches and diodes of bridge switching circuit 14 connected to the primary winding of transformer 12.

One way devised to eliminate the above drawbacks, i.e. to reduce the above overvoltages and spurious resonance, is to connect, in parallel with the secondary winding of transformer 12, an auxiliary or so-called "snubber circuit", which is typically defined by a dissipative RC network comprising a capacitor and a resistor connected in series between the terminals of the secondary winding of transformer 12.

More specifically, the snubber circuit capacitor helps to increase the capacitance of the circuit and so reduce resonance frequency, and receives part of the energy stored by parasitic inductor 15, which is dissipated via the snubber circuit resistor, thus reducing the above overvoltages.

Though greatly reducing overvoltage, by the capacitor storing large part of the energy of the parasitic inductor, DC-DC converters with a snubber circuit of the type described above dissipate a large amount of power which at times is excessive.

That is, the power dissipated by the snubber circuit resistor, being dissipated at each voltage switching edge, i.e. four times for each operating frequency period, is directly proportional to the operating frequency of the DC-DC converter, which must therefore not be so high as to result in dissipation making adoption of the DC-DC converter unfeasible.

It is therefore an object of the present invention to provide a DC-DC converter capable of lowering the resonance frequency, and which eliminates power dissipation by the snubber circuit.

According to the present invention, there is provided a DC-DC converter comprising a first and a second input terminal connected, in use, to an electric power source; a first and a second output terminal, between which a load is connected in use; a transformer; a bridge switching circuit connected at the input to said first and said second input terminal, and at the output to the primary winding of said transformer; a rectifier circuit connected at the input to the secondary winding of said transformer, and having a first and a second output terminal connected respectively to a first and a second intermediate node; a snubber circuit connected between said first and said second intermediate node; and a filter circuit interposed between said snubber circuit and said first and said second output terminal of said DC-DC converter; said DC-DC converter being characterized in that said snubber circuit comprises capacitive means; controlled one-way current-conducting switching means connected in series with said capacitive means, between the first and second intermediate node; and current-conducting one-way means connected in parallel with said switching means; said switching means and said one-way means being connected to each other to permit current conduction in opposite directions to each other.

A non-limiting embodiment of the present invention will be described by way of example with reference to the accompanying drawings, in which:

Figure 1 shows a circuit diagram of a known DC-DC converter;
Figures 2 and 3 show time graphs of the voltages at the terminals of the primary and secondary windings respectively of the Figure 1 DC-DC converter transformer;
Figure 4 shows a circuit diagram of a DC-DC converter in accordance with the teachings of the present invention;
Figures 5 and 6 show two circuit diagrams of a first and second embodiment of a circuit portion of the Figure 4 DC-DC converter.

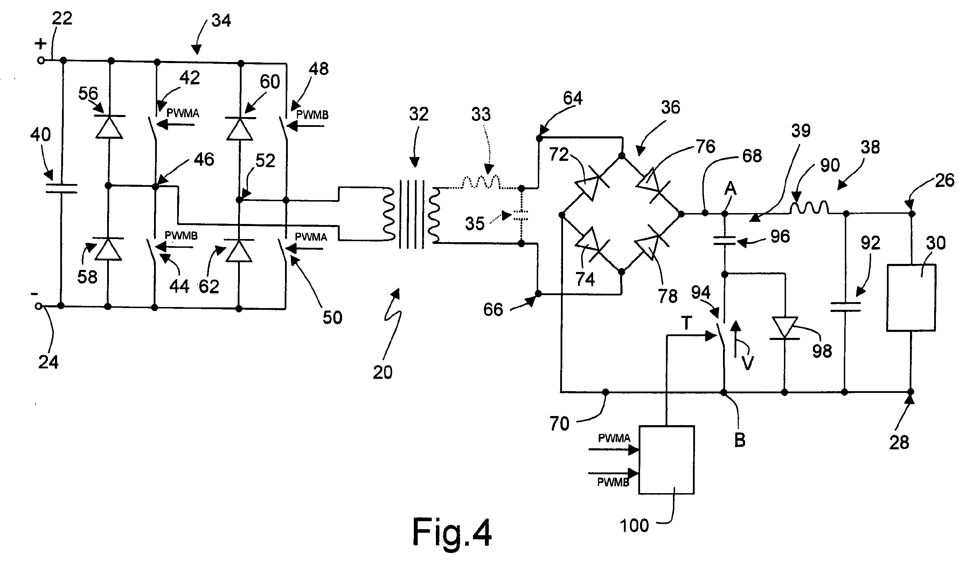

With reference to Figure 4, number 20 indicates as a whole a DC-DC converter comprising a first and a second input terminal 22, 24 connected respectively, in use, to the positive and negative poles of an electric power source (not shown); and two output terminals 26, 28, between which a load 30 is connected in use.

The DC-DC converter comprises a voltage transformer 32; a bridge switching circuit 34 interposed between input terminals 22, 24 and the primary winding of transformer 32; a rectifier circuit 36 connected at the input to the secondary winding of transformer 32, and at the output to output terminals 26, 28 via a filter circuit 38; and a snubber circuit 39 interposed between rectifier circuit 36 and filter circuit 38.

Bridge switching circuit 34 comprises a stabilizing capacitor 40 connected between first and second input terminal 22 and 24; four diodes; and two pairs of switches connected in series between first and second input terminal 22 and 24, and controlled in pairs in phase opposition by pulse width modulated (PWM) signals supplied by a signal source (not shown).

With reference to the Figure 4 example in particular, bridge switching circuit 34 comprises a first and a second switch 42 and 44 connected in series with each other between first and second input terminal 22 and 24, and having an intermediate connecting node 46 connected to a first terminal of the primary winding of transformer 32; and a third and a fourth switch 48 and 50 connected in series with each other between first and second input terminal 22 and 24, and having an intermediate connecting node 52 connected to a second terminal of the primary winding of transformer 32.

The first and fourth switch 42 and 50 are controlled by a first pulse signal PWMA, and the second and third switch 44 and 48 are controlled by a second pulse signal PWMB in phase opposite with first pulse signal PWMA and supplied, together with first pulse signal PWMA, by a signal source (not shown). Modulation of the PWM signals is known and therefore not described in detail.

Each of the four diodes is connected in parallel with a respective switch 42, 44, 48, 50. More specifically, a first diode 56 is connected in parallel with first switch 42, and has the anode terminal connected to intermediate node 46, and the cathode terminal connected to first input terminal 22; a second diode 58 is connected in parallel with second switch 44, and has the cathode terminal connected to intermediate node 46, and the anode terminal connected to second input terminal 24; a third diode 60 is connected in parallel with third switch 48, and has the anode terminal connected to intermediate node 52, and the cathode terminal connected to first input terminal 22; and a fourth diode 62 is connected in parallel with fourth switch 50, and has the cathode terminal connected to intermediate node 52, and the anode terminal connected to second input terminal 24.

Transformer 32 is a known type, and is shown schematically in Figure 4 by an ideal transformer, and a series of capacitive and inductive parasitic elements connected downstream from the secondary winding of the ideal transformer. The parasitic elements of a transformer are known to comprise a capacitor 35 having a parasitic capacitance $C_P$ and connected in parallel with the secondary winding of transformer 32; and an inductor 33 having a parasitic inductance $L_P$ and interposed between the secondary winding of transformer 32 and a terminal of capacitor 35.

Rectifier circuit 36 comprises a full diode bridge or a half diode bridge.

In the Figure 4 example, rectifier circuit 36 is defined by a full diode bridge comprising a first and a second input terminal 64, 66 connected respectively to the first and second output terminal of the secondary winding of transformer 32; and a first and a second output terminal 68, 70 connected respectively to a first and a second intermediate node hereinafter indicated A and B and to which are also connected respectively the first and second input terminal of filter circuit 38.

Rectifier circuit 36 comprises a first diode 72 having the cathode terminal connected to first input terminal 64, and the anode terminal connected to second output terminal 70; a second diode 74 having the cathode terminal connected to second input terminal 66, and the anode terminal connected to second output terminal 70; a third diode 76 having the anode terminal connected to first input terminal 64, and the cathode terminal connected to first output terminal 68; and a fourth diode 78 having the anode terminal connected to second input terminal 66, and the cathode terminal connected to first output terminal 68.

Filter circuit 38 comprises an inductor 90 connected between first intermediate node A and first output terminal 26 of converter 20; and a capacitor 92 having a first terminal connected between inductor 90 and first output terminal 26, and a second terminal connected to second output terminal 28, which is connected directly to second intermediate node B.

It should be pointed out that bridge switching circuit 34, transformer 32, rectifier circuit 36, and filter circuit 38 are all known types and therefore not described in further detail.

Snubber circuit 39, on the other hand, unlike those used in known DC-DC converters, comprises a switch 94 controlled by a control signal T; a capacitive element 96 connected in series with switch 94, between first and second intermediate node A and B; and a current-conducting one-way element 98 connected in parallel with switch 94.

More specifically, in the Figure 4 example, capacitive element 96 comprises a capacitor 96 having a capacitance $C_S$, a first terminal connected to first intermediate node A, and a second terminal connected to a first terminal of switch 94, which in turn has a second terminal connected to second intermediate node B.

In the example shown, capacitor 92 conveniently has a capacitance $C_S$ greater by a few orders of magnitude ($C_S \gg C_P$) than the parasitic capacitance $C_P$ of capacitor 35, so as to assist, together with the parasitic capacitance of capacitor 35 (as described in detail later on), in absorbing the energy stored by parasitic inductor 33 of transformer 32, and so advantageously reduce resonance frequency and overvoltages.

Switch 94 of snubber circuit 39 is a controlled one-way switch (described in detail later on) for only conducting current from second intermediate node B to first intermediate node A in the direction V indicated by the arrow in Figure 4; and one-way element 98 is connected antiparallel with switch 94, so as to only conduct current in the opposite direction to that of switch 94, i.e. from capacitive element 96 to second intermediate node B.

One-way element 98 is defined by a diode 98 connected in parallel with switch 94, and having the anode terminal connected to the node connecting switch 94 and capacitive element 96, and the cathode terminal connected to second intermediate node B.

In actual use, diode 98 conducts (is turned on) when the voltage at its terminals is positive and above the turn-on threshold, and does not conduct (is turned off) when the voltage at its terminals is negative.

DC-DC converter 20 also comprises a logic control circuit 100, which receives the two pulse signals PWMA and PWMB supplied to switches 42, 44, 48, 50 of bridge switching circuit 34, and supplies control signal T controlling switch 94.

Switch 94 may be a bipolar NPN or PNP type, an n- or p-channel MOSFET type, or an IGBT type.

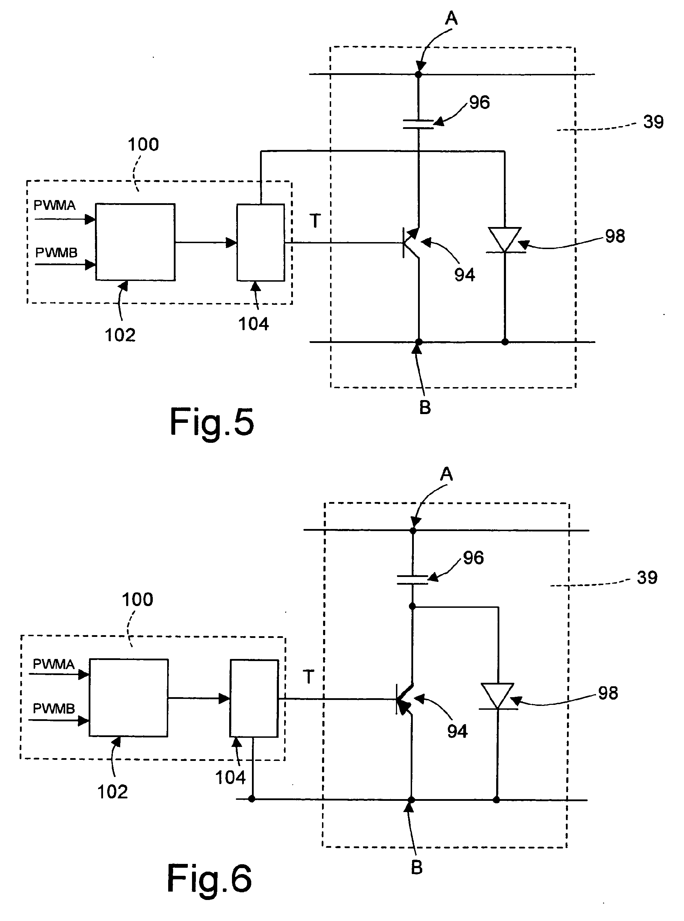

More specifically, in the examples shown in Figures 5 and 6, switch 94 is defined by a bipolar NPN and PNP transistor respectively, with the emitter, and respectively collector, terminal connected to the anode of diode 98, and the collector, and respectively emitter, terminal connected to second intermediate node B and to the cathode terminal of diode 98.

With reference to Figures 5 and 6, logic control circuit 100 may be defined by an OR circuit 102, which receives the two pulse signals PWMA and PWMB, and is connected by a known drive circuit 104 (not described in detail) to the base terminal of the bipolar transistor, to which it supplies control signal T for closing/opening switch 94.

More specifically, control signal T closes switch 94 when one of the two pairs of switches in bridge switching circuit 34 is closed by pulse signals PWMA or PWMB, and, conversely, opens switch 94 when all the switches in bridge switching circuit 34 are open.

In actual use, each pulse of pulse signals PWMA or PWMB switches one pair of switches in bridge switching circuit 34, so that control circuit 100 closes switch 94 of snubber circuit 39.

In the example shown, closure of switch 94 connects capacitor 96 of the snubber circuit in parallel with parasitic capacitor 35 of transformer 32, thus increasing the total capacitance $C_T = C_P + C_S$ and so reducing the resonance frequency Fr.

The resonance frequency, in fact, is known to be inversely proportional to the total capacitance $C_T$ of the circuit, and is determined by the following equation:

$$Fr = \frac{1}{2\pi\sqrt{L_P \times C_T}}$$

where Fr is the resonance frequency; Lp is the inductance of parasitic inductor 33; and $C_T$ is the sum of capacitance $C_P$ of capacitor 35 and capacitance $C_S$ of snubber circuit 39, which are connected in parallel by closure of switch 94.

In this condition, the voltage $V_{AB}$ between first and second intermediate node A and B, being positive, turns on diode 98, which allows capacitor 96 of the snubber circuit to charge, so that the voltage at its terminals equals the voltage $V_{AB}$ supplied by rectifier circuit 36.

It should be pointed out that, at this stage, the energy stored in parasitic inductor 33 of transformer 32 is absorbed to a greater degree by capacitor 96 of snubber circuit 39, which, having a capacitance $C_S$ much higher than parasitic capacitance $C_P$, advantageously brings about a big reduction in overvoltage, so that the variation in voltage between first and second intermediate node A and B is negligible. At this stage, in fact, capacitor 35 is connected in parallel with capacitor 96, which is free to charge (via the full diode bridge) or discharge (via inductor 90 and the load) until the voltage at its terminals equals the nominal output voltage of transformer 32.

When switches 42, 44, 48, 50 of bridge switching circuit 34 are all open, i.e. in the absence of control signal PWMA and PWMB pulses, control signal T from control circuit 100 opens switch 94, which thus prevents current flow between snubber circuit 39 and load 30.

More specifically, at this stage, the output voltage $V_{AB}$ of rectifier circuit 36 is substantially zero, diode 98 is turned off, and capacitor 96 of snubber circuit 39 therefore remains charged at the previous voltage $V_{AB}$, thus advantageously preventing overcharging of capacitor 96 and the full bridge when the switches are again closed by signals PWMA and PWMB.

The foregoing description clearly shows the advantages of the snubber circuit, which, by virtue of the high capacitance $C_S$ of capacitor 96, provides for reducing to negligible values the overvoltages caused by the energy stored in parasitic inductor 33. In the example shown, the energy dissipated by snubber circuit 39 is that caused by the parasitic elements of diode 98, switch 94, and capacitor 96, which may be of little effect.

Finally, it should be pointed out that the initial current in parasitic inductor 33 (upon closure of the switches by signals PWMA and PWMB) is the sum of the charge current of capacitor 35 (which is initially discharged or charged with the opposite sign) and of the current in load 30, in the case of non-discontinuous current flow operation, so that the overvoltages which may occur (in the absence of snubber circuit 39) are also a function of the current in load 30. Consequently, given the much higher capacitance of capacitor 96 than $C_P$, snubber circuit 39 is advantageously unaffected by the problem, by always being able to reduce the overvoltages to negligible values.

Clearly, changes may be made to the DC-DC converter as described and illustrated herein without, however, departing from the scope of the present invention.

**Claims**

1. A DC-DC converter (20) comprising a first and a second input terminal (22, 24) connected, in use, to an electric power source; a first and a second output terminal (26, 28), between which a load (30) is connected in use; a transformer (32); a bridge switching circuit (34) connected at the input to said first and said second input terminal (22, 24), and at the output to the primary winding of said transformer (32);

a rectifier circuit (36) connected at the input to the secondary winding of said transformer (32), and having a first and a second output terminal (68, 70) connected respectively to a first and a second intermediate node (A, B); a snubber circuit (39) connected between said first and said second intermediate node (A, B); and a filter circuit (38) interposed between said snubber circuit (39) and said first and said second output terminal (26, 28) of said DC-DC converter (20); said DC-DC converter (20) being **characterized in that** said snubber circuit (39) comprises capacitive means (96); controlled one-way current-conducting switching means (94) connected in series with said capacitive means (96), between the first and second intermediate node (A, B); and current-conducting one-way means (98) connected in parallel with said switching means (94); said switching means (94) and said one-way means (98) being connected to each other to permit current conduction in two opposite directions to each other.

2. A DC-DC converter (20) as claimed in Claim 1, **characterized in that** said one-way means (98) comprise at least one diode (98).

3. A DC-DC converter (20) as claimed in Claim 2, **characterized in that** said diode (98) has the anode connected to a first terminal of said switching means (94), which is connected to said capacitive means (96), and the cathode connected to a second terminal of said switching means (94).

4. A DC-DC converter (20) as claimed in any one of the foregoing Claims, **characterized in that** said switching means (94) comprise a transistor.

5. A DC-DC converter (20) as claimed in Claim 4, **characterized in that** said transistor may be a bipolar type, a MOSFET type, or an IGBT type.

6. A DC-DC converter (20) as claimed in Claim 5, **characterized in that** said bipolar transistor is an NPN type, and has the emitter terminal connected to the anode of said diode (98), the collector terminal connected to the second intermediate node (B), and the base terminal receiving a control signal (T).

7. A DC-DC converter (20) as claimed in Claim 5, **characterized in that** said bipolar transistor is a PNP type, and has the collector terminal connected to the anode of said diode (98), the emitter terminal connected to the second intermediate node (B), and the base terminal receiving a control signal (T).

8. A DC-DC converter (20) as claimed in any one of the foregoing Claims, **characterized in that** said capacitive means (96) comprise at least one capacitor (96).

9.   A DC-DC converter (20) as claimed in any one of the foregoing Claims, **characterized in that** said bridge switching circuit (34) comprises two pairs of switches connected in series between the first and second input terminal (22, 24) and controlled in pairs and in phase opposition by pulse signals (PWMA, PWMB) supplied by signal source means.

10.  A DC-DC converter (20) as claimed in Claim 9, **characterized by** comprising control means (100), which receive said pulse signals (PWMA, PWMB) and supply said control signal (T).

11.  A DC-DC converter (20) as claimed in Claim 10, **characterized in that** said control means (100) comprise a logic circuit (102) receiving said pulse signals (PWMA, PWMB).

12.  A DC-DC converter (20) as claimed in Claim 11, **characterized in that** said logic circuit (102) comprises a logic gate (OR); and **in that** said control means (100) comprise drive means (104) connected to the output of said logic gate (OR) and supplying the control signal (T) .

Fig.1

Fig.2

Fig.3

Fig.4

A

96

39

100

PWMA

PWMB

T

98

102

104

94

B

# Fig.5

A

96

39

100

PWMA

PWMB

T

98

102

104

94

B

# Fig.6

**European Patent Office**

## EUROPEAN SEARCH REPORT

Application Number

EP 03 02 0182

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BAEK J W ET AL: "An improved zero voltage and zero current switching full bridge PWM converter with secondary active clamp" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, 17 May 1998 (1998-05-17), pages 948-954, XP010294699 ISBN: 0-7803-4489-8 | 1-5,8-12 | H02M3/335 |
| Y | * the whole document * | 6,7 | |
| X | GARABANDIC D ET AL: "A class of zero-voltage-zero-current switching full bridge PWM converters with a parallel capacitor for primary current reset" ELECTRICAL AND COMPUTER ENGINEERING, 1999 IEEE CANADIAN CONFERENCE ON EDMONTON, ALTA., CANADA 9-12 MAY 1999, PISCATAWAY, NJ, USA,IEEE, US, 9 May 1999 (1999-05-09), pages 565-570, XP010359737 ISBN: 0-7803-5579-2 * figure 10 * | 1-5 | TECHNICAL FIELDS SEARCHED (Int.Cl.7)<br><br>H02M |
| Y | DE 195 06 587 A (RICOH KK) 31 August 1995 (1995-08-31) * figure 1 * | 6,7 | |

The present search report has been drawn up for all claims

| Place of search | Date of completion of the search | Examiner |
|---|---|---|
| MUNICH | 27 November 2003 | Braccini, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 03 02 0182

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2003

| Patent document cited in search report | Publication date | Patent family member(s) | Publication date |
|---|---|---|---|
| DE 19506587 A | 31-08-1995 | JP 3263225 B2 | 04-03-2002 |
| | | JP 7241078 A | 12-09-1995 |
| | | DE 19506587 A1 | 31-08-1995 |
| | | US 5712774 A | 27-01-1998 |